# EUROPÄISCHE PATENTSCHRIFT

(11) **EP 1 084 173 B1**
(45) Veröffentlichungstag und Bekanntmachung des Hinweises auf die Patenterteilung: **27.12.2006**
(21) Anmeldenummer: 99913292.1
(22) Anmeldetag: 20.03.1999
(51) Int. Cl.: C08J 3/215, C08L 21/00

(54) **PULVERFÖRMIGE, FÜLLSTOFFHALTIGE KAUTSCHUKPULVER, VERFAHREN ZU IHRER HERSTELLUNG UND VERWENDUNG**
POWDERED RUBBER CONTAINING FILLERS AND METHOD FOR PRODUCING AND USING IT
CAOUTCHOUC EN POUDRE RENFERMANT DES CHARGES, SON PROCEDE DE PRODUCTION ET SON UTILISATION

(30) Priorität: 07.04.1998 DE 19815453
(43) Veröffentlichungstag der Anmeldung: 21.03.2001
(73) Patentinhaber: PKU Pulverkautschuk Union GmbH, 45764 Marl (DE)
(72) Erfinder: GÖRL, Udo, D-53332 Bornheim (DE); STOBER, Reinhard, D-63594 Hasselroth (DE); LAUER, Hartmut, D-63628 Bad Soden-Salmünster (DE); ERNST, Uwe, D-45768 Marl (DE)
(86) Internationale Anmeldenummer: PCT/EP1999/001970
(87) Internationale Veröffentlichungsnummer: WO 1999/051664

(56) Entgegenhaltungen:
- DE-A- 3 723 213
- DE-A- 3 723 214
- US-A- 4 073 755

## Beschreibung

Die Erfindung betrifft pulverförmige, füllstoffhaltige Kautschuke, ein Verfahren zu ihrer Herstellung und ihre Verwendung.

Ober Ziel und Zweck des Einsatzes von Pulverkautschuken, sowie über mögliche Verfahren zu ihrer Herstellung ist eine Vielzahl von Publikationen erschienen.

Die Erklärung für das Interesse an pulverförmigen Kautschuken ergibt sich zwanglos aus der Verarbeitungstechnik der Gummiindustrie. Dort werden die Kautschukmischungen mit einem hohen Aufwand an Zeit, Energie und Personal hergestellt. Hauptgrund dafür ist, daß der Rohstoff Kautschuk ballenförmig vorliegt.

Die Zerkleinerung des Ballens, die innige Vermischung mit Füllstoffen, Mineralölweichmachern und Vulkanisationshilfsmitteln erfolgt auf Walzen oder in Innenmischern in mehreren Verfahrensstufen. Zwischen den Stufen wird die Mischung im allgemeinen gelagert. Den Innenmischern bzw. Walzen werden Extruder-Pelletizer oder Extruder-Rollerdies nachgeschaltet.
Aus dieser sehr aufwendigen Technik der KautschukVerarbeitung kann nur eine völlig neue Verarbeitungstechnologie herausführen.
Es wird daher seit längerem der Einsatz rieselfähiger Kautschukpulver diskutiert, weil sich damit die Möglichkeit ergibt, Kautschukmischungen wie thermoplastische Kunststoffpulver einfach und schnell verarbeiten zu können.

Aus der DE-PS 2822 148 ist ein Verfahren zur Herstellung eines pulverförmigen, füllstoffhaltigen Kautschuks bekannt.

Man setzt gemäß dieser Patentschrift einer Kautschuk-Latex, Kautschuk-Lösung oder der wäßrigen Emulsion eines Kautschuks eine wäßrige Füllstoffemulsion zu und fällt das gewünschte Kautschukpulver aus. Um die nach diesem Verfahren erhaltenen, korngrößenabhängigen Füllstoffgehalte zu vermeiden, wurden Varianten angemeldet, die als DE-PS 37 23 213 und DE-PS 37 23 214 zum Stand der Technik gehören.

Gemäß DE-PS 37 23 213 wird in einem zweistufig ablaufenden Verfahren zuerst eine Menge ≥50 % des Füllstoffs in das Kautschukpulverpartikel integriert. Im zweiten Schritt wird der Rest des Füllstoffs auf das sogenannte Kautschukgrundkorn aufgezogen.
Dies kann als eine Variante des Puderns angesehen werden, da keine Bindung zwischen Füllstoff und Kautschuk entsteht.

US-A-4 073 755 beschreibt die Herstellung von pulverförmigen, füllstoffhaltigen Kautschuken in einer Emulsion, wobei der pH-Wert zwischen 4 und 9 eingestellt wird. Erst nach der Neutralisation wird die restliche Rußsuspension zugegeben.

Wie E.T. Italiaander (Vortrag 151. Technische Tagung der Rubber Div. der ACS, Anaheim, Kalifornien, 6. - 9. Mai 1997 (GAK 6/1997 (50) 456-464) aber feststellt, ist ungeachtet der großen Zukunft, die im Delphi-Report (Delphi Report "Künftige Herstellverfahren in der Gummiindustrie" Rubber Journal, Vol. 154, Nr. 11, 20-34 (1972)) für pulverförmigen und granulierten Kautschuk vorausgesagt wurde, und zahlreiche Versuche, die von namhaften Polymerherstellern ab Mitte der siebziger Jahre bis in die frühen achtziger Jahre zur Herstellung von pulverförmigen NBR, SBR-Ruß-Masterbatches und granuliertem NR unternommen wurden, die Standard-Lieferform von Polymeren der Kautschukballen geblieben.

Ein Nachteil der bekannten Verfahren liegt zum einen darin, daß für die Einstellung des für die Qualität des Endprodukts als notwendig erachteten Korngrößendurchmessers der Füllstoffteilchen 10 µm ein Mahlvorgang notwendig ist.

Dieser bedingt aber nicht nur einen hohen Energieaufwand, sondern verursacht auch eine Schädigung der Füllstoffstruktur, die neben der aktiven Oberfläche eine wichtige Kenngröße für die Wirksamkeit in der Gummianwendung darstellt.

Zum anderen leidet die Handhabbarkeit der Produkte nach dem Stand der Technik darunter, daß die Partikel bei der Lagerung miteinander verkleben.

Aufgabe der Erfindung ist es daher, einen pulverförmigen, Füllstoff enthaltenden Kautschuk, der leicht handhabbar ist, ebenso wie ein Verfahren zu dessen Herstellung bereitzustellen.

Gegenstand der Erfindung ist ein pulverförmiger, Kautschuk (Kautschukpulver) mit einem durch das Fällverfahren fest mit der Kautschukmatrix verbundenen Füllstoffanteil. Eine Verwechslung mit nur oberflächlich (adhesiv) belegten Kautschukpartikeln (Stichwort: Pudern, Auffällen) ist damit nicht möglich.

Die erfindungsgemäßen Pulver weisen ein engeres und zu kleineren Teilchengrößen verschobenes Spektrum auf, als aus dem Stand der Technik hervorgeht
(Kautschuk + Gummi + Kunststoffe 7, 28 (1975) 397-402). Dieser Umstand erleichtert die Verarbeitung der Pulver. Aufgrund des Herstellverfahrens findet sich auch kein korngrößenabhängiger Füllstoffanteil in den einzelnen Partikeln.
Die pulverförmigen Kautschuke enthalten von 20 bis 250 phr, insbesondere von 50 bis 100 phr Füllstoff (phr: parts per hundred parts of rubber).
Als Kautschuktypen geeignet haben sich folgende Spezies gezeigt, einzeln oder im Gemisch miteinander:
Naturkautschuk, Emulsions-SBR mit einem Styrolanteil von 10 bis 50 %, Butyl-Acrylnitril-Kautschuk.
Butylkautschuke, Terpolymere aus Ethylen, Propylen (EPM) und nicht konjugierte Diene (EPDM), Butadienkautschuke, SBR, hergestellt nach dem Lösungspolymerisationsverfahren, mit Styrolgehalten von 10 bis 25 %, sowie Gehalten an 1,2-Vinylbestandteilen von 20 bis 55 % und
Isoprenkautschuke, insbesondere 3,4-Polyisopren.

Neben den genannten Kautschuken kommen folgende Elastomere, einzeln oder im Gemisch, in Frage:

Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Epichlorhydrine, gegebenfalls auch chemisch modifizierter Naturkautschuk, wie z. B. epoxidierte Typen.
Als Füllstoffe sind die aus der Kautschukverarbeitung bekannten Ruße und weißen Füllstoffe synthetischer Natur, wie z. B. gefällte Kieselsäuren oder natürliche Füllstoffe, wie z. b. Kieselkreide, Clays usw. zu nennen.

Besonders geeignet sind Ruße, wie sie allgemein in der Kautschukverarbeitung eingesetzt werden.

Dazu gehören Furnaceruße, Gas- und Flammruße mit einer Jodadsorptionszahl 5 bis 1000 m²/g, einer CTAB-Zahl von 15 bis 600 m²/g, einer DBP-Adsorption von 30 bis 400 ml/100 g und einer 24 M4 DBP-Zahl von 50 bis 370 ml/100 g in einer Menge von 5 bis 250 Teilen, insbesondere 20 bis 150 Teilen, auf 100 Teile Kautschuk, insbesondere 40 bis 100 Teile.

Geeignet sind ebenso die aus dem Kautschuksektor bekannten gefällten Kieselsäuren.

Diese besitzen im allgemeinen eine nach der bekannten BET-Methode bestimmte N₂-oberfläche von 35 bis 700 m²/g, eine CTAB-Oberfläche von 30 bis 500 m²/g, eine DBP-Zahl von 150 bis 400 ml/100g.
Das erfindungsgemäße Produkt enthält diese Kieselsäuren in einer Menge von 5 bis 250 Teilen, insbesondere 20 bis 100 Teilen, bezogen auf 100 Teile Kautschuk.

Handelt es sich um weiße Naturfüllstoffe , wie Clays oder Kieselkreiden mit einer N₂-Oberfläche von 2 bis 35 m²/g setzt man diesen in einer Menge von 5 bis 350 Teilen, bezogen auf 100 Teile Kautschuk, ein.

Geeignet sind auch füllstoffhaltige Kautschukpulver, die Kieselsäuren und Ruß im Gemisch enthalten.
Die Gesamtmenge an Füllstoff beläuft sich in diesem Fall auf 20 bis 250 Teile Füllstoff pro 100 Teilen Kautschuk.

Die erfindungsgemäßen Kautschukpulver enthalten neben den bereits genannten Füllstoffen gegebenfalls bekannten Verarbeitungs- oder Vulkanisationshilfsmittel wie Zinkoxid, Zinkstearat, Stearinsäure, Polyalkohole, Polyamine, Weichmacher, Alterungsschutzmittel gegen Wärme, Licht oder Sauerstoff und Ozon,
Verstärkerharze, Flammschutzmittel wie z. B. Al(OH)₃ und Mg(OH)₂, Pigmente,
verschiedene Vernetzungschemikalien und gegebenfalls Schwefel in den gummitechnisch üblichen Konzentrationen.

Die erfindungsgemäßen Kautschukpulver unterscheiden sich im Schnittbild eindeutig von den aus dem Stand der Technik bekannten Produkten.
Während diese eine im Idealfall homogene Verteilung des Füllstoffs in der Kautschukmasse, bzw. umgekehrt und eine Umhüllung aus Füllstoffteilchen aufweisen, findet sich erfindungsgemäß eine homogene Verteilung von Füllstoff und Kautschukanteil im Innern der pulverförmigen Produkte und in dem damit verbundenen Randbereich.

In Abhängigkeit vom Füllgrad der Partikel sind in die Oberfläche Füllstoffteilchen mit eingebunden,so daß ein Verkleben der Partikel auch unter Druck, wenn z. B. mehrere Säcke aufeinanderliegen, nicht erfolgt.

Diese "Inertisierung" der Oberfläche ist nicht zu verwechseln mit dem bekannten Pudern von klebrigen Pulvern mit Füllstoffen. Diese nur oberflächlich haftenden Füllstoffe werden bei der mechanischen Beanspruchung, z. B. in Förderanlagen oder beim Silieren schnell abgelöst.
Das Verkleben und Verklumpen der feinteiligen Pulver, das es zu verhindern gilt, tritt dann trotz des Puderns ein.
Im Unterschied zu den nach dem Stand der Technik bekannten, oberflächlich mit Füllstoffen als Fließhilfsmittel belegten klebrigen Partikeln handelt es sich erfindungsgemäß um eine Inkorporation von Füllstoffteilchen in die Oberfläche während des Fällprozesses zur Herstellung des pulverförmigen Kautschuks. In Abhängigkeit vom Füllungsgrad mit einem oder mehreren der oben genannten Füllstoffe wird die sinnvolle Verteilung zwischen Partikelinnerem und einen mit diesem verbundenen äußeren Bereich eingestellt.

Bei einem Produkt mit hohem Füllungsgrad (≥80 Teile Füllstoff pro hundert Teilen Kautschuk) sind im äußeren Kornbereich nur 1 bis 10 Teile dieser Füllstoffmenge eingebunden.
Enthält der pulverförmige Kautschuk jedoch insgesamt <80 Teile Füllstoff pro hundert Teilen Kautschuk, sind davon 10 bis 20 Teile im äußeren Kornbereich (Randbereich) gebunden, d. h. nicht durch die weniger wirksamen Adhäsionskräfte nur anhaftend.

Zwischen diesen Anteilen bewegen sich im allgemeinen die Verteilungen des Füllstoffs im Innern der Partikel und in dem sogenannten Randbereich.

Je höher der Gesamtgehalt an Füllstoff ist, desto weniger muß die Klebrigkeit des Pulvers durch ein erhöhte Konzentration der Füllstoff im Randbereich unterbunden werden.

Gegenstand der Erfindung ist auch ein Verfahren zur Herstellung feinteiliger, pulverförmiger und füllstoffhaltiger Kautschuke (Kautschukpulver) durch Ausfällen aus wasserhaltigen Mischungen, die Füllstoff in Form von Suspensionen, wasserlösliche Salze eines Metalls der Gruppen IIa, IIb, IIIa und VIII des periodischen Systems der Elemente und einen Kautschuklatex oder wässrige Emulsionen einer Kautschuklösung enthalten durch Zusatz einer Säure, das dadurch gekennzeichnet ist,daß man ≥50 Gew.-% des feinteiligen Füllstoffs mit 0,1 bis 6,5 Gew.-Teilen pro 100 Gew.-Teile Kautschuk der genannten wasserlöslichen Salze und einem Kautschuklatex oder einer wäßrigen Emulsion einer Kautschuklösung vermischt,den pH-Wert der Mischung auf einen Wert im Bereich von 5,5 bis 4,5 absenkt (erste Stufe), den restlichen Anteil des feinteiligen Füllstoffs in Form einer Suspension zusetzt und den pH-Wert auf ca. 3,2 absenkt (zweite Stufe), so daß der in der Mischung befindliche Kautschuk zusammen mit dem Füllstoff vollständig ausgefällt wird.

Die von dem pH-Wert und dem Füllstoffgehalt abhängige Dauer und der Umfang des Ausfällvorgangs kann innnerhalb einer Meßreihe einfach festgestellt werden.

Bei einem Pulverkautschuk mit hohem Füllungsgrad (280 Teile Füllstoff phr) wird man im allgemeinen 1 bis 10 Teile dieser Menge als restlichen Anteil in der zweiten Stufe bei der Ausfällung des Pulverkautschuks einsetzen.

Enthält der Pulverkautschuk weniger als 80 Teile Füllstoff phr, z. B. nur insgesamt 50 Teile phr, führt man vor dem Abschluß des Fällvorgangs noch >10 bis 20 Teile dieser Menge in Form einer Suspension in die Mischung ein.

Auf diese Weise werden die Füllstoffe in den äußeren Kornbereich (Randbereich) der Kautschulpulver eingebunden.

Diese Anteile des Füllstoffs sind damit nicht äußerlich auf die einzelnen Kautschukpartikel aufgezogen (s. DE-PS 37 23213), sondern in die Kautschukoberfläche integriert.

Diese Füllstoffverteilung und die Art der Bindung der Füllstoffe in der Kautschukmasse bewirken die hohe Fließfähigkeit der erfindungsgemäßen Pulver und verhindern das Verkleben während der Lagerung der Pulver, ohne daß diese Eigenschaften durch mechanische Belastungen beim Fördern, Silieren etc. verlorengehen.

Als Füllstoffe setzt man die obengenannten Ruße in feinteiliger Form (fluffy) ein, die im allgemeinen einen mittleren Korngrößendurchmesser von 1 bis 9 µm, vorzugsweise 1 bis 8 µm aufweisen, bevor sie suspendiert sind.

Dies erleichtert die Dispersion, so daß man ohne hohen Energieaufwand zu wäßrigen Suspensionen mit Füllstoffpartikeln eines mittleren Teilchendurchmessers deutlich kleiner als 10 µm gelangt.
Gefällte Kieselsäure kann vorteilhaft in Form eines salzfrei gewaschenen Filterkuchens eingesetzt werden.

Als Metallsalze kommen solche in Frage, die von Elementen der Gruppen IIa, IIb, IIIa und VIII des periodischen Systems der Elemente stammen. Diese Gruppeneinteilung entspricht der alten IUPAC-Empfehlung (siehe Periodisches System der Elemente, Verlag Chemie, Weinheim, 1985) Typische Vertreter sind Magnesiumchlorid, Zinksulfat, Aluminiumchlorid, Aluminiumsulfat, Eisenchlorid, Eisensulfat, Kobaltnitrat und Nickelsulfat, wobei die Salze des Aluminiums bevorzugt sind. Besonders bevorzugt ist Aluminiumsulfat.
Die Salze werden in einer Menge von 0,1 bis 6,5 Gewichtsteilen pro 100 Gewichtsteile Kautschuk eingesetzt. Zur Einstellung des definierten pH-Werte geeignete und gegebenenfalls eingesetzte Säuren sind in erster Linie Mineralsäuren, wie z. B. Schwefelsäure, Phosphorsäure und Salzsäure, wobei die Schwefelsäure besonders bevorzugt ist. Eingesetzt werden können aber auch Carbonsäuren, wie z. B. Ameisen- und Essigsäure.

Die Menge an Säure richtet sich nach der Art und Menge des wasserlöslichen Metallsalzes, des Füllstoffs, des Kautschuks und des gegebenfalls vorhandenen Alkalisilikats. Sie läßt sich durch einige orientierende Versuche leicht ermitteln.

Nach einer bevorzugten Ausführungsform des erfindungsgemäßen Verfahrens werden zusätzlich noch bis zu 5 Gewichtsteile pro 100 Gewichtsteile Kautschuk Kieselsäure (Si0₂) in Form einer Alkalisilikatlösung, vorzugsweise als Wasserglas mit einem Na₂O: SiO₂-Molverhältnis von 2 : 1 bis 1 : 4, eingesetzt. Die Alkalisilikatlösung kann dabei sowohl der Kautschukkomponente als auch der Füllstoff-Suspension zugesetzt werden. Bevorzugt ist die Zugabe zur Kautschuk-komponente, besonders bei der kontinuierlichen Fahrweise.

Im allgemeinen wir das erfindungsgemäße Verfahren wie folgt durchgeführt:
Zunächst wird eine Füllstoff-Suspension in der Weise hergestellt, daß man einen Teil, vorzugsweise ≥50 %, des im Endprodukt enthaltenen Füllstoffs zusammen mit dem Metallsalz und gegebenenfalls der Alkalisilikatlösung in Wasser dispergiert. Die Menge des insgesamt eingesetzten Wassers richtet sich nach der Art des Füllstoffs und dem Aufschlußgrad. Im allgemeinen liegen die nicht wasserlöslichen Bestandteile des Füllstoffs bei etwa 6 Gewichtsprozent. Dieser Wert stellt keine bindende Beschränkung dar und kann sowohl unter- als auch überschritten werden. Der maximale Gehalt wird durch die Pumpbarkeit der Suspension beschränkt.

Die so hergestellte Füllstoff-Suspension wird anschließend mit dem gegebenfalls Alkalisilikatlösung enthaltenden Kautschuk-Latex oder der gegebenfalls Alkalisilikatlösung enthaltenden wäßrigen Emulsion einer Kautschuk-Lösung bevorzugt in Gegenwart eines Emulgators innig vermischt. Dazu eignen sich bekannte Rühraggregate, wie z. B. Propeller-Rührer.

Nach dem Vermischen wird unter Aufrechterhaltung des Rührvorganges zunächst ein pH-Wert im Bereich von 5,5 bis 4,5 eingestellt. Dabei fällt ein Kautschuk-grundkorn mit einem konstanten Füllstoffgehalt an. Die Größe dieses Grundkorns wird durch die gewählte Metallsalzmenge im Bereich von 0,1 bis 6,5 phr gesteuert. Die Steuerung vollzieht sich so, daß mit der niedrigsten Menge an Metallsalz die größte Körnung erhalten wird.

Der Feststoffgehalt der eingesetzten Latices beläuft sich im allgemeinen auf 20 bis 25 Gew.-%. Der Feststoffgehalt der Kautschuklösungen beträgt im allgemeinen 3 bis 35 Gew.-%, der der Kautschukemulsionen im allgemeinen 5 bis 30 Gew.-%.

Diese Gemische und ihre Herstellung sind aus dem Stand der Technik bekannt.

Für die Aufarbeitung von Kautschukpulvern mit Füllstoffgehalten ≥100 phr ist es vorteilhaft, vor der Phasentrennung den pH-Wert bis auf 2,5 abzusenken. Dazu wird zweckmäßigerweise eine Säure aus der vorher genannten Gruppe der Säuren verwendet.

Das erfindungsgemäße Verfahren kann sowohl diskontinuierlich als auch kontinuierlich durchgeführt werden.

Das ausgefällte Kautschukpulver wird vorteilhaft mit Hilfe einer Zentrifuge abgetrennt und dann auf einen Restwassergehalt von im allgemeinen ≤ 1 % getrocknet, insbesondere in einem Wirbelbettrockner.

Während des Herstellverfahrens können dem erfindungsgemäßen Kautschukpulver weitere Verarbeitungs- und/oder Vulkanisationshilfsmittel in einer Menge oder auch geringer zugesetzt werden, die vulkanisierbare Kautschukmischungen in der Regel enthalten.

Die erfindungsgemäßen Kautschukpulver werden zur Herstellung vulkanisierbarer Kautschukmischungen verwendet. Dabei können die zur Mischungsherstellung notwendigen Bestandteile sämtlich im Kautschukpulver enthalten sein. Bevorzugt enthalten diese jedoch Kautschuk der oben aufgeführten Typen und Füllstoffe.

Sie können jedoch auch mit anderen Kautschuken und Füllstoffen konventionell vermischt werden, wenn dies für die gewünschte Kautschukmischung erforderlich ist.

Es gelingt erfindungsgemäß, feinteiliges Kautschukpulver herzustellen, das rieselfähig ist und auch nach mechanischer Beanspruchung (z. B. Fördern, Verpacken) rieselfähig bleibt.
Aufgrund seiner Feinteiligkeit sind keine Mahl- oder sonstige Zerkleinerungsmaßnahmen notwendig, um feinteilige Dispersionen zu erhalten.

Diese führen dann zu den feinteiligen Kautschukpulvern, die sich leicht verarbeiten lassen und zu Vulkanisaten mit verbesserten Eigenschaften.

### Beispiele

A. In den Beispielen wird das Verarbeitungsverhalten von nach dem Stand der Technik hergestellten Kautschukpulvern (DE-PS 3723213) und den erfindungsgemäßen Kautschukpulvern beschrieben.
Ebenso werden die mit diesen Pulvern erhaltenen gummitechnischen Daten verglichen.
In Beispiel 1 werden die Mischungen 1 bis 4 unter Verwendung eines N 375 Rußes hergestellt, wie er allgemein nur verfügbar ist, nämlich in naßgeperlter Form. Um die gemäß DE-PS 3723213 notwendige Feinteiligkeit von 10 µ(mittlerer Korndurchmesser) zu erreichen, mußte er zuvor vermahlen werden. Dies entspricht den Verhältnissen zum Zeitpunkt der Hinterlegung der genannten Patentschrift.
Die Mischungen 5 bis 8 werden unter Verwendung von N 375 in der "fluffy"-Form hergestellt.
Es zeigt sich, daß die unter Verwendung der erfindungsgemäßen Kautschukpulver hergestellten Vulkanisate bei kürzeren Mischzeiten für die Kautschukmischungen und gleichen Zusammensetzungen der Mischungen zu überlegenen gummitechnischen Daten führen.
B. In den Beispielen verwendete Prüfnormen:

| | Einheit | Norm |
|---|---|---|
| Zugfestigkeit | Mpa | DIN 53504 |
| Modul 300 % | Mpa | DIN 53504 |
| Weiterreißwiderstand | N/mm | DIN 53507 |
| Shore-A-Härte | - | DIN 53507 |
| DIN-Abrieb | nm³ | DIN 53516 |
| Bruchdehnung | % | DIN 53504 |

C. In den Beispielen verwendete Chemikalien:
TESPT Bis(triethoxysilylpropyl)tetrasulfan (Si69 Degussa AG
Naftolen ZD Weichmacher, aromatische Kohlenwasserstoffe
6PPD N-1,3-Dimethylbutyl-N'-phenyl-p-phenylendiamin
CBS N-Cyclohexyl-2-benzo-thiazolsulfenamid

### Beispiel 1 Vergleich einer N 375 (82 Teile) gefüllten E - SBR Mischung in Abhängigkeit von der Mischzeit. (Standardverfahren gegen erfindungsgemäßes Verfahren)

| a) Rezepturen | 1 - 4 | 5 - 8 |
|---|---|---|
| PB I (Standard) | 180 | --- |
| EPB I (erfindungsgemäß) | --- | 180 |
| ZnO RS | 3 | 3 |
| Stearinsäure | 2 | 2 |
| Naftolen ZD | 30 | 30 |
| 6PPD | 2 | 2 |
| Wachs | 1 | 1 |
| CBS | 1,35 | 1,35 |
| Schwefel | 1,35 | 1,35 |

### b) Mischverfahren

### 1. Stufe

| Innenmischer: GK 1,5 N , Volumen 1,6 L , Friktion 1 : 1,11, Stempeldruck 5,5 bar | | |
|---|---|---|
| Mischung | | 1 - 8 |
| PRM | [ 1/min ] | 60 |
| Temp [ °C ] | | 50 |
| Füllgrad | | 0,85 |
| Mischzeit: | | |
| | 0 - 0,5- | PB I bzw. EPB I |
| | | Naftolen ZD , ZnO RS, Stearinsäure, 6PPD, Wachs |
| | 0,5' | Säubern und Lüften |
| | 0,5'- x' | Mischen und Ausstoßen |
| x' = 1,2,3,4 | | |
| Batchtemperatur : ~150 °C | | |

### 2. Stufe

| Innenmischer : GK 1,5 N , Volumen 1,6 L , Friktion 1 : 1,11, Stempeldruck 5,5 bar RPM 40, Temperatur 50 °C . Füllgrad 0,68 | | |
|---|---|---|
| Mischzeit: | | |
| | 0 - 0,5' | Batch Stufe 1 |
| | | Beschleuniger , Schwefel |
| | 0,5 - 1,5 | Mischen, Ausstoßen und Fell bilden |
| Batchtemperatur : ~ 110 °C | | |

### c) Prüfungen am Vulkanisat

### 1. Füllstoffdispersion, Teilchengröße, Uneinheitlichkeit

| | Standard | | | | erfindungsgemäßes Verfahren | | | |
|---|---|---|---|---|---|---|---|---|
| Mischzeit [min] | 4 | 3 | 2 | 1 | 4 | 3 | 2 | 1 |
| Dispersionskoeffizient [%] | 96,5 | 95,7 | 95,4 | 93,5 | 95,4 | 95,6 | 95,2 | 93,4 |
| 1. Moment ( um ) | 13,0 | 17,6 | 16,3 | 16,5 | 11,4 | 10,8 | 12,3 | 12,1 |
| 2. Moment ( um ) | 21,7 | 28,9 | 28,9 | 27,7 | 15,8 | 13,5 | 17,9 | 16,8 |
| 3. Moment ( um ) | 36,4 | 40,5 | 40,7 | 41,5 | 27,6 | 19,6 | 30,2 | 26,4 |
| Uneinheitlichkeit | 0,67 | 0,64 | 0,65 | 0,68 | 0,38 | 0,25 | 0,46 | 0,39 |

Der Vergleich zeigt, daß bei Produkten nach dem erfindungsgemäßen Verfahren die Teilchengrößen ( 1 -3 Moment ) deutlich kleiner ist als beim Standard und daß darüberhinaus die Teilchen auch einheitlicher sind ( kleinerer Wert für die Uneinheitlichkeit )

### 2. Gummitechnische Daten

| | Standard | | | | erfindungsgemäßes Verfahren | | | |
|---|---|---|---|---|---|---|---|---|
| Mischzeit [ min ] | 4 | 3 | 2 | 1 | 4 | 3 | 2 | 1 |
| Prüfmethode : | | | | | | | | |
| Zugfestigkeit [ MPa ] | 15,9 | 15,8 | 15,1 | 15,0 | 16,4 | 16,7 | 16,4 | 16,4 |
| Modul 300% [ MPa ] | 6,8 | 7,1 | 6,8 | 7,0 | 7,3 | 7,5 | 7,3 | 7,4 |
| Bruchdehnung [ % ] | 600 | 570 | 560 | 550 | 590 | 590 | 590 | 600 |
| Bruchenergie [ J ] | 145 | 135 | 127 | 124 | 147 | 149 | 148 | 155 |
| Shore A Härte | 64 | 63 | 65 | 65 | 64 | 63 | 64 | 65 |
| Ball Rebound: | | % | | | | | | |
| 0°C | 18,7 | 18,1 | 17,9 | 18,1 | 18,4 | 18,3 | 18,2 | 18,4 |
| 60°C | 35,1 | 34,8 | 34,3 | 33,9 | 37,5 | 36,8 | 37,1 | 36,3 |
| Verlustwinkel: | | | | | | | | |
| tan δ ( 0°C ) | 0,374 | 0,373 | 0,368 | 0,368 | 0,381 | 0,374 | 0,359 | 0,365 |
| tan δ ( 60°C ) | 0,311 | 0,304 | 0,318 | 0,311 | 0,298 | 0,299 | 0,302 | 0,300 |

Der Vergleich zeigt, daß selbst bei kürzester Mischzeit ( 1' ) die Produkte gemäß beanspruchtem Verfahren ein ausgezeichnetes Wertebild ergeben. Die Vorteile werden besonders bei den Festigkeitswerten, Bruchenergie und längeren Bruchdehnungen deutlich. Vorteile zeigen sich auch beim Rebound und tan δ bei 60°C.

### Beispiel 2 Vergleich einer Kieselsäure/TESPT gefüllten PKW - Laufflächenmischung auf Basis E - SBR (Standardverfahren gegen erfindungsgemäßes Verfahren )

| a) Rezepturen | 1 | 2 |
|---|---|---|
| PB II (Standard) | 175 | - |
| EPB II (erfindungsgemäß ) | - | 175 |
| ZnO RS | 3 | 3 |
| Stearinsäure | 2 | 2 |
| Naftolen ZD | 10 | 10 |
| 6PPD | 2 | 2 |
| Wachs | 1 | 1 |
| CBS | 1,5 | 1,5 |
| DPG | 2 | 2 |
| Schwefel | 1,5 | 1,5 |

### b) Mischverfahren

### 1. Stufe

| Innenmischer : GK 1,5 N , Volumen 1,6 L , Friktion 1 : 1,11, Stempeldruck 5,5 bar | | |
|---|---|---|
| Mischung | | 1 + 2 |
| PRM [ 1/min ] | | 60 |
| Temp [°C] | | 50 |
| Füllgrad | | 0,8 |
| Mischzeit: | | |
| | 0 - 3' | PB II bzw. EPB II |
| | | Naftolen ZD, ZnO RS, Stearinsäure, 6PPD, Wachs |
| | 3' | Säubern und Lüften |
| | 3' - 4' | Mischen und Ausstoßen |
| Batchtemperatur :~ 155 °C | | |

### 2. Stufe

| Innenmischer : GK 1,5 N , Volumen 1,6 L , Friktion 1 : 1,11, Stempeldruck 5,5 bar RPM 40 Temperatur 50 °C . Füllgrad 0,68 | | |
|---|---|---|
| Mischzeit: | | |
| | 0 - 0,5' | Batch Stufe 1 |
| | | Beschleuniger**,** Schwefel |
| | 0,5 - 1,5 | Mischen, Ausstoßen und Fell bilden |
| Batchtemperatur: ~ 110 °C | | |

### c) Gummitechnische Daten

| Prüfmethode: | Einheit | 1 | 2 |
|---|---|---|---|
| Dispersion | Rauhigkeitsfaktor | 3025 | 960 |
| Zugfestigkeit | M Pa | 20,2 | 22,7 |
| Modul 300% | MPa | 12,9 | 13,7 |
| Bruchdehnung | % | 410 | 440 |
| Bruchenergie | J | 126 | 143 |
| Shore A Härte | ----- | 78 | 77 |
| DIN Abrieb | mm³ | 90 | 80 |

Die Produkte nach erfindungsgemäßem Verfahren zeichnen sich durch bessere Dispersion, höhere Festigkeit, einem höheren Verstärkungsverhalten und den besser DIN Abrieb aus.

## Patentansprüche

1. Feinteiliger, pulverförmiger Kautschuk (Kautschukpulver) mit homogener Verteilung von Füllstoff und Kautschukanteil im Innern der pulverförmigen Produkte und in dem damit verbundenen Randbereich, hergestellt durch Ausfällen aus wasserhaltigen Mischungen, die Füllstoff in Form von Suspensionen, wasserlösliche Salze eines Metalls der Gruppen, IIa, IIb, IIIa und VIII des periodischen Systems der Elemente und einen Kautschuklatex oder wässrige Emulsionen einer Kautschuklösung enthalten durch Zusatz einer Säure, wobei man ≥ 50 Gew.-% des feinteiligen Füllstoffs mit 0,1 bis 6,5 Gew.-Teilen pro 100 Gew.-Teile Kautschuk der genannten wasserlöslichen Salze und einem Kautschuklatex oder einer wässrigen Emulsion einer Kautschuklösung bevorzugt in Gegenwart eines Emulgators vermischt, den pH-Wert der Mischung auf einen Wert im Bereich von 5,5 bis 4,5 absenkt (erste Stufe), den restlichen Anteil des feinteiligen Füllstoffs in Form einer Suspension zusetzt und den pH-Wert auf ca. 3,2 absenkt (zweite Stufe), so dass der in der Mischung befindliche Kautschuk zusammen mit dem Füllstoff vollständig ausgefällt wird.

2. Feinteilige Kautschukpulver gemäß Anspruch 1, mit einem Gehalt an Füllstoffen von 20 bis 250 phr.

3. Feinteilige Kautschukpulver gemäß den Ansprüchen 1 oder 2, die als Füllstoff 5 bis 250 phr einer gefällten Kieselsäure enthalten.

4. Feinteilige Kautschukpulver gemäß den Ansprüchen 1 oder 2, die als Füllstoff in einer Menge von 5 - 250 phr eines Rußes enthalten.

5. Feinteilige Kautschukpulver gemäß einem oder mehreren der vorhergehenden Ansprüche, die als Füllstoffe Kieselsäure und Ruß in einer Gesamtmenge von 20 - 250 phr enthalten.

6. Feinteilige Kautschukpulver gemäß einem oder mehreren der vorhergehenden Ansprüche, die zusätzlich übliche Verarbeitungs- und Vulkanisationshilfsmittel enthalten.

7. Feinteilige Kautschukpulver gemäß einem oder mehreren der vorhergehenden Ansprüche, dessen Einzelpartikel aus zwei einen Mittelpunkt konzentrisch umgebenden, gegebenenfalls unterschiedliche Füllstoff- und/oder Kautschukanteil enthaltende, innig miteinander verbundenen Bereichen bestehen.

8. Verfahren zur Herstellung feinteiliger, pulverförmiger und füllstoffhaltiger Kautschuke (Kautschukpulver) durch Ausfällen aus wasserhaltigen Mischungen, die Füllstoff in Form von Suspensionen, wasserlösliche Salze eines Metalls der Gruppen IIa, IIb, IIIa und VIII des periodischen Systems der Elemente und einen Kautschuklatex oder wässrige Emulsionen einer Kautschuklösung enthalten durch Zusatz einer Säure,
**dadurch gekennzeichnet,**
**dass** man ≥ 50 Gew.% des feinteiligen Füllstoffs mit 0,1 bis 6,5 Gew.-Teilen pro 100 Gew.-Teile Kautschuk der genannten wasserlöslichen Salze und einem Kautschuklatex oder einer wässrigen Emulsion einer Kautschuklösung bevorzugt in Gegenwart eines Emulgators vermischt, den pH-Wert der Mischung auf einen Wert im Bereich von 5,5 bis 4,5 absenkt (erste Stufe), den restlichen Anteil des feinteiligen Füllstoffs in Form einer Suspension zusetzt und den pH-Wert auf ca. 3,2 absenkt (zweite Stufe), so dass der in der Mischung befindliche Kautschuk zusammen mit dem Füllstoff vollständig ausgefällt wird.

9. Verfahren nach Anspruch 8,
**dadurch gekennzeichnet,**
**dass** man bei einem Gesamtanteil von ≥ 80 Teilen Füllstoff phr 1 bis 10 Teile dieser Menge als restlichen Anteil in der zweiten Stufe zusetzt.

10. Verfahren nach Anspruch 9,
**dadurch gekennzeichnet,**
**dass** man bei einem Gesamtanteil von < 80 Teilen Füllstoff phr > 10 bis 20 Teile dieser Menge als restlichen Anteil in der zweiten Stufe zusetzt.

11. Verfahren gemäß einem der vorhergehenden Ansprüche,
**dadurch gekennzeichnet,**
**dass** man einen Ruß mit einer mittleren Teilchengröße von 1 bis 9 µm einsetzt.

12. Verfahren gemäß einem der vorhergehenden Ansprüche,
**dadurch gekennzeichnet,**
**dass** man Kieselsäure in Form eines salzfrei gewaschenen Filterkuchens einsetzt.

13. Verfahren nach einem der vorhergehenden Ansprüche,
**dadurch gekennzeichnet,**
**dass** man während der Ausfällung der Kautschukpulver weitere übliche Verarbeitungs- und Vulkanisationshilfsmittel zusetzt.

14. Verfahren nach einem der vorhergehenden Ansprüche,
**dadurch gekennzeichnet,**
**dass** man als wasserlösliches Metall Aluminiumsulfat einsetzt.

15. Verfahren nach einem der vorhergehenden Ansprüche,
**dadurch gekennzeichnet,**
**dass** man in Gegenwart von Alkalisilikat arbeitet.

16. Verfahren nach Anspruch 15,
**dadurch gekennzeichnet,**
**dass** man bis zu 5 phr SiO₂ in Form von Alkalisilikatlösung zusetzt.

17. Verfahren nach einem der vorhergehenden Ansprüche,
**dadurch gekennzeichnet,**
**dass** man bei der Herstellung von Kautschukpulvern mit Füllgraden ≥ 100 phr den pH-Wert vor der Phasentrennung bis auf 2,5 absenkt.

18. Verwendung der pulverförmigen füllstoffhaltigen Kautschukpulver gemäß den Ansprüchen 1 bis 7 zur Herstellung vulkanisierbarer Kautschukmischungen.

## Claims

1. Fine-particle pulverulent rubber (rubber powder) with homogeneous distribution of filler and rubber content within the pulverulent products and in the peripheral region bonded thereto, prepared by adding an acid to bring about precipitation from aqueous mixtures which comprise filler in the form of suspensions, comprise water-soluble salts of a metal of groups IIa, IIb, IIIa and VIII of the Periodic Table of the Elements, and comprise a rubber latex or aqueous emulsions of a rubber solution, where ≥ 50% by weight of the fine-particle filler are mixed with from 0.1 to 6.5 parts by weight of the water-soluble salts mentioned per 100 parts by weight of rubber and with a rubber latex or with an aqueous emulsion of a rubber solution, preferably in the presence of an emulsifier, the pH of the mixture is lowered to a value within the range from 5.5 to 4.5 (first stage), the remainder of the fine-particle filler is added in the form of a suspension, and the pH is lowered to about 3.2 (second stage), so that the rubber present in the mixture is completely precipitated together with the filler

2. Fine-particle rubber powders according to Claim 1 with from 20 to 250 phr content of fillers.

3. Fine-particle rubber powders according to Claim 1 or 2, in which the filler comprises from 5 to 200 phr of a precipitated silica.

4. Fine-particle rubber powders according to Claim 1 or 2, in which the filler comprises from 5 to 250 phr of a carbon black.

5. Fine-particle rubber powders according to one or more of the preceding claims, in which the fillers present comprise from 20-250 phr in total of silica and carbon black.

6. Fine-particle rubber powders according to one or more of the preceding claims which additionally comprises customary processing and vulcanization auxiliaries.

7. Fine-particle rubber powders according to one or more of the preceding claims, whose individual particles are composed of two regions intimately bonded to one another and concentrically surrounding a central point and, if desired, having different proportions of filler and/or rubber.

8. Process for preparing fine-particle, pulverulent, filled rubbers (rubber powders) by adding an acid to bring about precipitation from aqueous mixtures which comprise filler in the form of suspensions, comprise water-soluble salts of a metal of groups IIa, IIb, IIIa or VIII of the Periodic Table of the Elements, and comprise a rubber latex or comprise aqueous emulsions of a rubber solution, **characterized in that** ≥ 50% by weight of the fine-particle filler are mixed with from 0.1 to 6.5 parts by weight of the water-soluble salts mentioned per 100 parts by weight of rubber and with a rubber latex or with an aqueous emulsion of a rubber solution, preferably in the presence of an emulsifier, the pH of the mixture is lowered to a value within the range from 5.5 to 4.5 (first stage), the remainder of the fine-particle filler is added in the form of a suspension, and the pH is lowered to about 3.2 (second stage), so that the rubber present in the mixture is completely precipitated together with the filler.

9. Process according to Claim 8,
**characterized in that**
the total proportion of filler used is ≥ 80 parts phr, and from 1 to 10 parts from this amount are added as the remainder in the second stage.

10. Process according to Claim 9,
**characterized in that**
the total proportion of filler used is < 80 parts phr, and from > 10 to 20 parts from this amount are added as the remainder in the second stage.

11. Process according to any of the preceding claims,
**characterized in that**
use is made of a carbon black with an average particle size of from 1 to 9 µm.

12. Process according to any of the preceding claims,
**characterized in that**
use is made of silica in the form of a filter cake washed until free from salts.

13. Process according to any of the preceding claims,
**characterized in that**
during the precipitation of the rubber powders other customary processing or vulcanization auxiliaries are added.

14. Process according to any of the preceding claims,
**characterized in that**
the water-soluble metal salt used comprises aluminum sulfate.

15. Process according to any of the preceding claims,
**characterized in that**
operations are carried out in the presence of alkali metal silicate.

16. Process according to Claim 15,
**characterized in that**
up to 5 phr of SiO₂ are added in the form of alkali metal silicate solution.

17. Process according to any of the preceding claims,
**characterized in that**
during preparation of rubber powders with filler levels ≥ 100 phr, the pH is lowered to 2.5 prior to phase separation.

18. Use of the pulverulent filled rubber powders according to Claims 1 to 7 for preparing vulcanizable rubber mixtures.

## Revendications

1. Caoutchouc pulvérisé (poudre de caoutchouc) finement divisé, ayant une répartition homogène de la matière de charge et de la partie caoutchouc dans le volume intérieur des produits pulvérisés, ainsi que dans la zone marginale qui leur est liée, préparé par précipitation de mélanges aqueux, qui contiennent une matière de charge sous forme de suspensions, de sels solubles dans l'eau d'un métal des groupes IIa, IIb, IIIa et VIII du Tableau Périodique des Eléments, et un latex d'élastomère-caoutchouc, ou encore sous forme d'émulsions aqueuses d'une solution de caoutchouc, par addition d'un acide, auquel cas on mélange, de préférence en présence d'un émulsifiant, à une quantité ≥ 50 % en poids de la matière de charge finement divisée, 0,1 à 6,5 parties en poids, pour 100 parties en poids de caoutchouc, des sels solubles dans l'eau mentionnés ci-dessus, et un latex d'élastomère-caoutchouc, ou une émulsion aqueuse d'un latex d'élastomère-caoutchouc, on diminue le pH du mélange à une valeur comprise dans la plage de 5,5 à 4,5 (première étape), on ajoute la partie restante de la matière de charge finement divisée sous forme d'une suspension, et on abaisse le pH à environ 3,2 (deuxième étape), de façon que le caoutchouc se trouvant dans le mélange subisse une précipitation complète en même temps que la matière de charge.

2. Poudres de caoutchouc finement divisées selon la revendication 1, ayant une teneur en matières de charge de 20 à 250 phr.

3. Poudres de caoutchouc finement divisées selon les revendications 1 ou 2, qui en tant que matière de charge contiennent 5 à 250 phr d'une silice précipitée.

4. Poudres de caoutchouc finement divisées selon les revendications 1 ou 2, qui en tant que matière de charge contiennent une quantité de 5 à 250 phr d'un noir de carbone.

5. Poudres de caoutchouc finement divisées selon l'une ou plusieurs des revendications précédentes, qui en tant que matière de charge contiennent de la silice et du noir de carbone en une quantité totale de 20 à 250 phr.

6. Poudres de caoutchouc finement divisées selon l'une ou plusieurs des revendications précédentes, qui contiennent en outre des auxiliaires usuels de mise en oeuvre et de vulcanisation.

7. Poudre de caoutchouc finement divisée selon l'une ou plusieurs des revendications précédentes, dont les particules individuelles sont constituées de deux domaines, intimement liés l'un à l'autre, qui entourent d'une manière concentrique un point central, et qui éventuellement contiennent des proportions différentes de la matière de charge et/ou du caoutchouc.

8. Procédé de préparation de caoutchoucs finement divisés, pulvérisés et contenant une matière de charge (poudres de caoutchouc) par précipitation à partir de mélanges aqueux qui contiennent la matière de charge sous forme de suspensions, de sels solubles dans l'eau d'un métal des groupes IIa, IIb, IIIa et VIII du Tableau Périodique des Eléments et un latex d'élastomère-caoutchouc, ou des émulsions aqueuses d'une solution de caoutchouc, par addition d'un acide, **caractérisé en ce qu'**on mélange, de préférence en présence d'un émulsifiant, à une quantité ≥ 50 % en poids de la matière de charge finement divisée, 0,1 à 6,5 parties en poids, pour 100 parties en poids de caoutchouc, des sels solubles dans l'eau mentionnés ci-dessus, et un latex d'élastomère-caoutchouc, ou une émulsion aqueuse d'un latex d'élastomère-caoutchouc, on diminue le pH du mélange à une valeur comprise dans la plage de 5,5 à 4,5 (première étape), on ajoute la partie restante de la matière de charge finement divisée sous forme d'une suspension, et on abaisse le pH à environ 3,2 (deuxième étape), de façon que le caoutchouc se trouvant dans le mélange subisse une précipitation complète en même temps que la matière de charge.

9. Procédé selon la revendication 8, **caractérisé en ce que**, dans la deuxième étape, et pour une proportion totale ≥ 80 parties phr de matière de charge, on ajoute en tant que partie restante 1 à 10 parties de cette quantité.

10. Procédé selon la revendication 9, **caractérisé en ce que**, dans la deuxième étape, on ajoute pour une proportion totale < 80 parties phr de matière de charge, > 10 à 20 parties de cette quantité en tant que parties restantes.

11. Procédé selon l'une des revendications précédentes, **caractérisé en ce qu'**on utilise un noir de carbone ayant une granulométrie moyenne de 1 à 9 *µ*m.

12. Procédé selon l'une des revendications précédentes, **caractérisé en ce qu'**on utilise la silice sous forme d'un gâteau de filtration lavé et débarrassé des sels.

13. Procédé selon l'une des revendications précédentes, **caractérisé en ce que**, pendant la précipitation de la poudre de caoutchouc, on ajoute d'autres auxiliaires usuels de mise en oeuvre et de vulcanisation.

14. Procédé selon l'une des revendications précédentes, **caractérisé en ce qu'**on utilise en tant que métal soluble dans l'eau du sulfate d'aluminium.

15. Procédé selon l'une des revendications précédentes, **caractérisé en ce qu'**on travaille en présence d'un silicate d'un métal alcalin.

16. Procédé selon la revendication 15, **caractérisé en ce qu'**on ajoute jusqu'à 5 phr de SiO₂ sous forme d'une solution d'un silicate d'un métal alcalin.

17. Procédé selon l'une des revendications précédentes, **caractérisé en ce que**, lors de la préparation de poudres de caoutchouc ayant des taux de charge ≥ 100 phr, on abaisse le pH, avant la séparation des phases, jusqu'à 2,5.

18. Utilisation des poudres de caoutchouc chargées et pulvérisées selon les revendications 1 à 7, pour fabriquer des mélanges de caoutchouc vulcanisables.
